# EUROPEAN PATENT APPLICATION

(11) **EP 1 596 280 A1**
(43) Date of publication of application: **16.11.2005**
(21) Application number: 04252754.9
(22) Date of filing: 12.05.2004
(51) Int. Cl.: G06F 9/30

(54) **Pseudo register file write ports**

(71) Applicant: STMicroelectronics Limited, Almondsbury, Bristol BS32 4SQ (GB)
(72) Inventor: Jacobs, Kristen, Bristol BS5 8HF (GB); Hedinger, Peter, Bristol BS10 5EJ (GB)
(74) Representative: Style, Kelda Camilla Karen

(57) **Abstract**

A system comprising: a plurality of execution circuitry for executing instructions; a register file comprising at least one port; and circuitry for allowing a plurality of said execution circuitry to share a common port of said register file.

## Description

The present invention relates to a system for writing to a register file and reading from a register file, and in particular to a system for optimising the use of write ports in a register file.

Computer processors generally include a number of registers local to the central processing unit (CPU) which are used as fast memory for storing data on which execution units in the CPU operate. A register file contains a number of registers, for example 64 registers, each containing for example 32 bits of data. The CPU includes a number of execution units, and register files generally have a number of write ports allowing these execution units to write data values to the registers, and a number of read ports allowing data to be retrieved from the registers in the register file.

The number of execution units in the CPU determines the maximum number of computations per second that a processor is able to perform, and hence the more execution units that are provided, the better the performance of the processor will be. The register file will generally have enough read and write ports to service the execution units. For example the register file may have two read ports for each execution unit allowing two register values to be read from the register file to each execution unit on each instruction cycle of the processor, and one write port for each execution unit allowing each processor to write one value to a register in the register file on each cycle. This would allow each processor to process instructions comprising two source operands and one destination operand on each cycle. If four execution units were provided in the CPU, this would means that the register file would need a minimum of 8 read ports and 4 write ports.

In order to increase the processor speed it is desirable to increase the number of execution units, however this would result in an increase in the size of the register file. Adding ports to a register file not only increases the size of the register file, but can reduce its maximum frequency.

In order to minimise the number of write ports in a register file, execution units are provided with a single output to a write port, and therefore the result of the execution of an instruction will result in only one destination operand. However some operations, for example multiply instructions, which may require two source operands of 32 bits each, and produce a result of 64 bits, would require two destination registers to store the result. With a single write port for each execution unit the result will not be written in the same cycle.

It is an aim of embodiments of the present invention to address these problems.

According to an embodiment of the present invention, a system is provided comprising a plurality of execution circuitry for executing instructions, a register file comprising at least one port, and circuitry for allowing a plurality of said execution circuitry to share a common port of said register file.

For a better understanding of the present invention and as to how the same may be carried into effect, reference will now be made by way of example only to the accompanying drawings in which:
Figure 1 illustrates a system with a register file and four execution units;
Figure 2 illustrates communication paths between an execution unit and a register file;
Figure 3A illustrates a system according to a first embodiment of the present invention;
Figure 3B illustrates write-enable signals and circuitry which are incorporated in the first embodiment of the present invention shown in Figure 3A;
Figure 4 illustrates a system according to a second embodiment of the present invention;
Figure 5A illustrates a system according to a third embodiment of the present invention; and
Figure 5B illustrates write-enable signals and circuitry which are incorporated in the third embodiment of the present invention shown in Figure 5A.

In the following description of embodiments of the present invention, a register file and one or more execution units are described. It will be apparent, however that the invention is not limited to such an application, and could be applicable to system in which memory is accessed by write ports. Embodiments of the present invention are particularly effective when the number of write ports is limited or where adding write ports reduces the efficiency of the system. Embodiments of the present invention as described in this description may be implemented in a multitude of devices which include one or more register files or similar memory. For example, such devices may include personal computers or components of PCs such as video graphics cards, sounds cards, network cards or central processing units. Other devices where embodiments of the present invention may be implemented include digital versatile disk players and recorders, set top boxes, satellite decoders, compact disk player and recorders, video players and recorders, camcorders etc. This is by way of example only and embodiments of the invention can be incorporated in any suitable device.

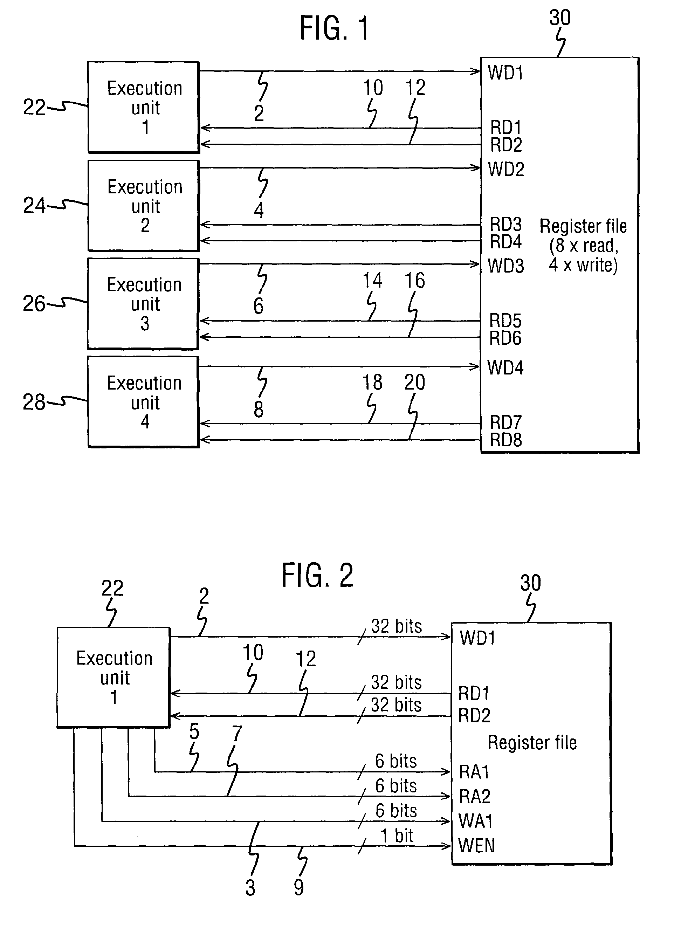

Figure 1 illustrates a system in which embodiments of the present invention may be implemented. Four execution units 22 to 28 are shown which may access a register file 30 via write ports W_{D1} to W_{D4} and read ports R_{D1} to R_{D8}. Four write lines 2 to 8 are provided such that each of the execution units 22 to 28 may write data to registers in the register file through write ports W_{D1} to W_{D4} respectively. Eight read lines are provided from the register file to the execution units, two lines being provided to each execution unit such that on each cycle two register values may be read from two registers in the register file to the execution unit via two of the read ports R_{D1} to R_{D8}. For example, execution unit 22 may write to register file on line 2 via write port 1, and read from read ports R_{D1} and R_{D2} on lines 10 and 12.

Figure 2 illustrates communication signals between execution unit 22 and register file 30 in more detail. As described in relation to Figure 1, write line 2 allows execution unit 1 to write data to the register file 30 via a write port W_{D1} which is reserved for data signals. This line is 32 bits wide, allowing 32 bits of data to be transferred from the execution unit to the register file 30 on each clock cycle. Read lines 10 and 12 are as shown in Figure 1 and allow the execution unit 1 to read register values from the register file via ports R_{D1} and R_{D2}, which are reserved for data signals. Again lines 10 and 12 are 32 bits wide allowing two 32 bit registers to be read to the execution unit in each cycle. Address lines 3, 5 and 7 are provided from the execution unit to write address port W_{A1}, and read address ports R_{A1} and R_{A2} of the register file respectively. Address line 3 is 6 bits wide and provides the address of the register to which the write data is to be written. In a present embodiment the register file comprises 64 registers, and therefore an address signal comprising 6 bits is provided to address each of the registers. In alternative embodiments more or less registers may be provided and a greater number or fewer bits may be used to address the registers. Lines 5 and 7 are read lines between the execution unit 22 and read address ports R_{A1} and R_{A2} which provide the addresses of the two data registers in the register file, the data from which will be output at ports R_{D1} and R_{D2} and transmitted on lines 10 and 12. Finally a write enable signal on line 9 is provided from the execution unit 22, the operation of which will now be described.

When writing data to the register file, values stored in the register file will be destroyed, and therefore it is very important that address and data signals received by the register file for a particular write operation are correct. The write enable signal on line 9 is used to ensure that the write port is enabled only at the correct time when both the data and address signals are valid. For example, when performing a write operation, execution unit 22 will provide address and data signals on lines 2 and 3 respectively, and only when these values have settled will the execution unit assert the write enable signal W_{EN} on line 9. Upon receiving the write enable signal, the register file will proceed to process the write operation based on the current data and address values. Throughout the specification the write enable signal is described as being a one bit value which is active high. This signal may alternatively be active low.

Figure 2 illustrates the lines to and from the register file 30 for one of the execution units of Figure 1, however identical lines exist between each of the execution units shown in Figure 1 and the register file 30. Write address ports W_{A2} to W_{A4} (one associated with each write data port) and read address ports R_{A3} to R_{A8} (one associated with each read data port) are also provided in the register file, although these have not been shown in Figure 2.

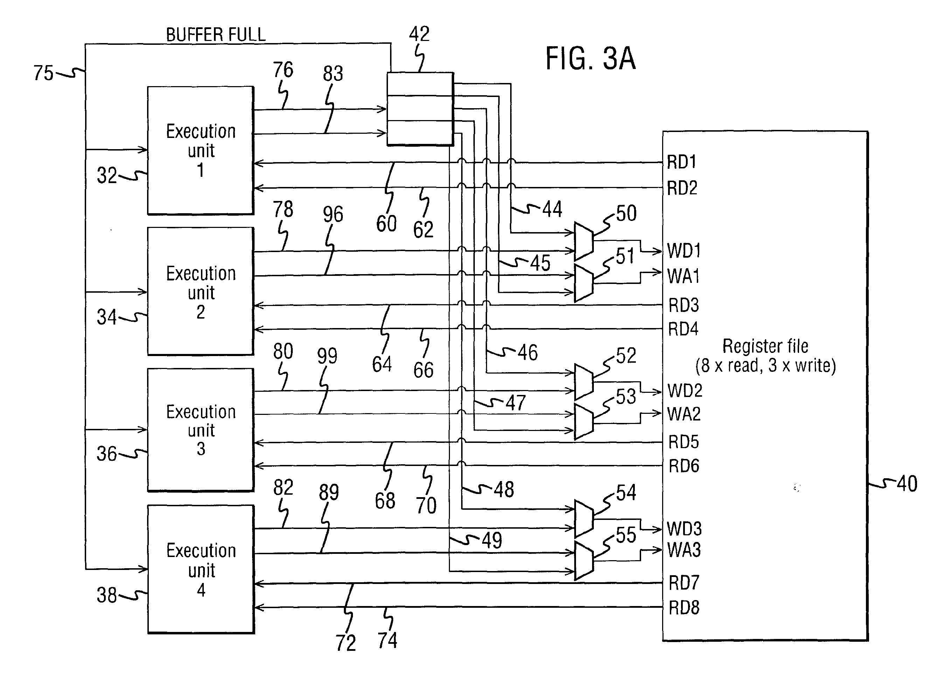

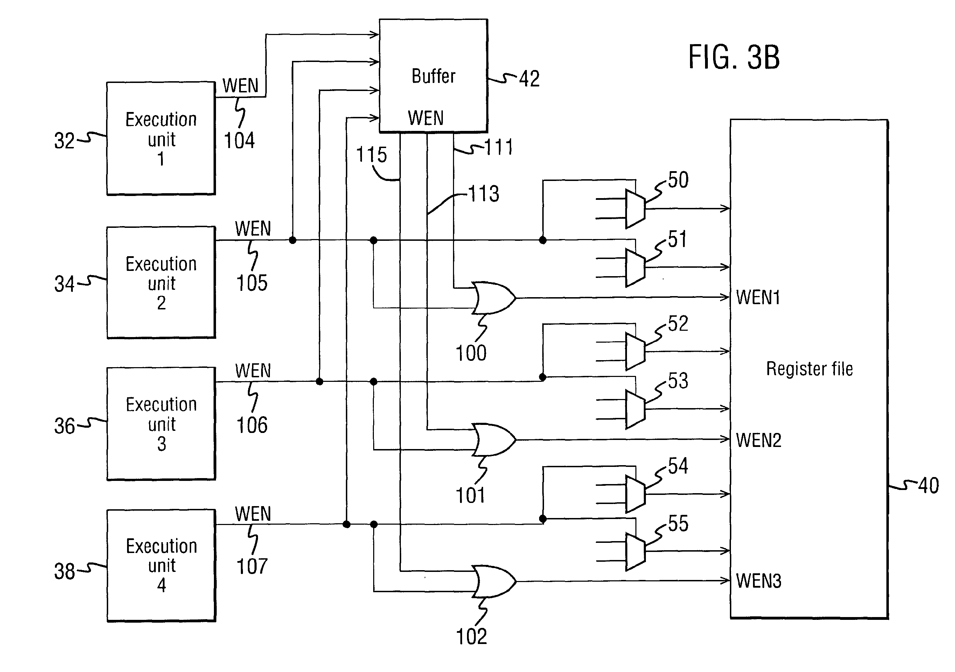

A study of register files will show that the ports and register files are not used fully. This is because there have to be enough ports to support peak performance, but this is very rarely achieved. There are a number of reasons why the write ports are not fully used. Firstly, the compiler/scheduler is not able to find enough parallelism in the code to issue operations to each execution unit all of the time. This may be because the result of an execution by a first execution unit is required by a second execution unit, and so the second execution unit may need to be stalled until the result is ready. Those units with nothing to do will have spare register file ports. Secondly, the ports of the register file will not be used whenever the processor is stalled. Thirdly there are operations which use no or fewer write ports. For example, a store operation will often not need to write to a destination register in the register file, so one or more write ports may be unused during this operation. This redundancy is exploited by the system as shown in Figure 3, in which a pseudo write port is proposed to replace one of the register file ports as will now be explained.

Figure 3A illustrates a first embodiment of the present invention. Each of the four execution units 32, 34, 36 and 38 shown in Figure 3A has a write data output on lines 76, 78, 80 and 82 respectively. Furthermore each of the execution units has two read inputs on lines 60 to 74. As described above, it is desirable to reduce the number of write ports to register files. In Figure 3A, only three such write ports are provided in register file 40, and these are labelled W_{D1}, W_{D2} and W_{D3}. Write address ports W_{A1} to W_{A3} are also provided, for receiving the address of the register to which the data received on respective write ports W_{D1} to W_{D3} is to be supplied. Eight read ports are provided, two read ports per execution unit. The read ports are labelled R_{D1} to R_{D8}. The read ports provide data read from registers in the register file 40 directly to the execution units. Read address ports are also present in register file 40, although for the sake of clarity these have not been shown in Figure 3. Each execution unit 32 to 38 supplies the address of registers it requires to read from to the read address ports, each of which is associated with a data read port which returns the requested data value, as described above in relation to Figure 2.

In order that four execution units may write to three input write ports in the register file 40, a buffer 42 is provided and six multiplexers 50 to 55 are also provided, three of which 50, 52, 54 are provided for write data signals, and three of which 51, 53, 55 are provided for write address signals. Write enable circuitry is also provided, not shown in Figure 3A, which will be described herein after in relation to Figure 3B. Returning to Figure 3A, each of the multiplexers 50, 52 and 54 has its output connected to a write data port W_{D1} to W_{D3} respectively. Each multiplexer 50, 52 and 54 also has two inputs for data, one of which is connected to the buffer 42, and one of which is connected to a respective one of the execution units 34 to 38. Each multiplexer also has a third control input for determining which of the inputs is connected to the output. Each of the multiplexers 51, 53 and 55 has its output connected to a write address port W_{A1} to W_{A3} respectively. Each of the multiplexers 51, 53 and 55 also has two inputs for data, one of which is connected to the buffer 42, and one of which is connected to a respective one of the execution units 34 to 38. These multiplexers also have a third control input for determining which of the inputs is connected to the output.

Rather than writing data directly to a write port, execution unit 32 is connected to buffer 42 and writes values into this buffer via data line 76 and address line 83. Buffer 42 comprises a memory with space to store three data values, and three address values associated with the data values. Alternatively buffer 42 may have more memory such that more than three registers worth of data may be stored or less memory such that only one or two registers worth of data may be stored. Buffer 42 has a buffer full output on line 75 which is connected to each of the execution units 32 to 38, and will be described in more detail herein after.

Write enable signals and circuitry are also provided in the embodiment of Figure 3A, however for clarity these are shown in separate figure, Figure 3B. The execution units, buffer, register file and multiplexer blocks in Figure 3B are the same as those shown in Figure 3A and therefore only the write enable circuitry between these blocks will now be described.

As shown in Figure 3B, each of the execution units 32 to 38 has a write enable output on lines 104 to 107 respectively, and three OR gates 100 to 102 are provided. As described in relation to Figure 2, the write enable signal is asserted when the signals on associated write data and write address lines are valid. The write enable signals from each execution unit are provided to buffer 42. The write enable signal from execution unit 34 is also provided to one of the two inputs of OR gate 100, and also to the control inputs of multiplexers 50 and 51 which are associated with the write data and write address ports W_{D1} and W_{A1} used by execution unit 34. Similarly, the write enable signals from execution units 36 and 38 are provided to one of the inputs to OR gates 101 and 102, and to the control inputs of multiplexers 52 and 53 and multiplexers 54 and 55 on lines 106 and 107 respectively. The output from each of the OR gates 100 to 102 is provided to a respective write enable input W_{EN1} to W_{EN3} in register file 40, each write enable input being associated with a write port.

Operation of the apparatus shown in Figures 3A and 3B will now be described. In preferred embodiments of the present invention, the processor is unaware that one of the write ports to the register file is a pseudo write port. In normal operation execution units 34, 36 and 38 write directly to the write data ports W_{D1} to W_{D3}, and the write address ports W_{A1} to W_{A3}. This requires that the multiplexers 50 to 55 are controlled, via their control input, to allow the write data signals on lines 78, 80 and 82, and the write address signals on lines 96, 99 and 89 to pass through to the write ports in the register file 40. Control signals for the multiplexers 51 to 55 are provided by the write enable signals from the execution units as shown in Figure 3B. When one of the execution units 34 to 38 writes to the register file 40, its write enable signal will be asserted, and this controls the two multiplexers connected to the write data and write address ports associated with that execution unit to allow signals from the execution unit to pass through to the register file 40. At the same time, the write enable signal will be provided to the register file 40 via one of the OR gates 100 to 102. For example, when execution unit 36 writes to the register file, data and address values will be provided on lines 80 and 99 respectively, and the write enable signal on line 106 will be high. The high write enable signal will have the effect of controlling multiplexers 52 and 53 such that they allow the write data and write address signals on lines 80 and 99 respectively to pass to the register file. At the same time the output of OR gate 101 will go high in response to the write enable signal, providing the write enable signal to the second write enable input W_{EN2} in the register file.

While the write ports are occupied by execution units 34 to 38 as described above, write values and associated address values from execution unit 32 are written to buffer 42 where up to three such values may be stored. The write enable signal on line 104 from execution unit 32 is provided to buffer 42 in order to ensure that the data written to the buffer is valid.

At any time when not all of the three write data ports W_{D1} to W_{D3} and associated write address ports W_{A1} to W_{A3} are being used, the pseudo port buffer 42 will empty itself as quickly as possible using any of the write ports not being used. This will be on any cycles where the processor is stalling or when any one of the execution units is not using its write port, and will be indicated by the write enable signal. Buffer 42, which receives the write enable signals from each of the execution units 34 to 38, will determine that for any write enable signal on lines 105 to 107 which is not high on a particular cycle, the associated execution unit 34 to 38 is not using its write port in the register file 40.

In the situation that buffer 42 contains three registers worth of data, and the write ports are busy being used by execution units 34 to 38 respectively, then it may be necessary to stall the processor in order to empty the buffer 42 and avoid it overflowing. When buffer 42 is full, the buffer full signal on line 75 is asserted. Each of the execution units has a stall input, for indicating when it should stall. There are likely to be one or more other stall signals provided to this stall input, and the buffer full signal is also provided to this input of each execution unit using an OR gate. For example, the buffer full signal to one of the execution units could be input to an OR gate, with the other one or more signals that determine a stall as other inputs to the OR gate, and the output could be connected to the execution unit stall input. It will only be necessary to stall the processor for one cycle in order to empty the buffer if the buffer is designed to store as many data and address values as the number of write ports, as with the embodiment of Figure 3A in which one register value may be written to each of the write ports W1 to W3 via multiplexers 50 to 55.

An example will now be given of the operation of buffer 42. The situation can be taken in which execution unit 32 has stored two data and two address values in buffer 42 via lines 76 and 83 on consecutive clock cycles whilst the write ports on the register file 40 are being used by execution units 34 to 38. On the third clock cycle, execution unit 36 is stalled (for example it is given a no operation (NOP) instruction), and therefore does not require use of its write port, and this is indicated to buffer 42 by the write enable signal on line 106 remaining low. Buffer 42 responds by providing write data and write address values of a first one of the data and address values in its memory on lines 46 and 47. The write enable signal on line 106 from execution unit 36 being low, multiplexers 52 and 53 are controlled such that the data and address lines from buffer 42 are connected to the write ports of the register file. Buffer 42 then provides a high write enable signal on line 113, which is provided to write enable input W_{EN2} of the register file, and the values at write ports W_{D2} and W_{A2} are used by the register file 40 such that the data value is written to its associated 6 bit address location. On the next clock cycle, the write enable signal on line 106 will return high if execution unit 36 requires use of the write port. Multiplexers 52 and 53 are then controlled to allow execution unit 36 access to the write ports W_{D2} and W_{A2} again.

Next, an example of the situation when buffer 42 is full will be looked at. In order to avoid overflow of buffer 42, all execution units 32 to 38 will be stalled for one cycle in order to allow the contents of buffer 42 to be emptied. As explained above, when buffer 42 is full, the buffer full signal on line 75 will be asserted, indicating to each of the execution units that they must stall for that cycle. Execution unit 32 will be stalled in addition to the execution units 34 to 38 to prevent new values arriving in the buffer in this cycle. Once the execution units 34 to 38 are stalled, the write enable signal from each execution unit on lines 105 to 107 will remain low for the cycle, controlling multiplexers 50 to 55 to allow buffer 42 access to the write ports of the register file 40. Buffer 42 will then provide data on lines 44 to 49, which will pass through to the write ports of register file 40. Three write addresses will then be provided from buffer 42 on lines 45, 47 and 49 to each of the write address ports W_{A1}, W_{A2} and W_{A3} respectively. Data values associated with these addresses will be provided on lines 44, 46 and 48 from buffer 42, and sent to write data ports W_{D1}, W_{D2} and W_{D3}. Buffer 42 will then generate write enable signals on lines 111 to 113 to register file 40 to indicate when the data and address values are valid. In this way buffer 42 is emptied. On the next clock cycle execution units 34 to 38 are no longer stalled by the buffer 42, and may continue to operate normally with direct access to the write ports when required.

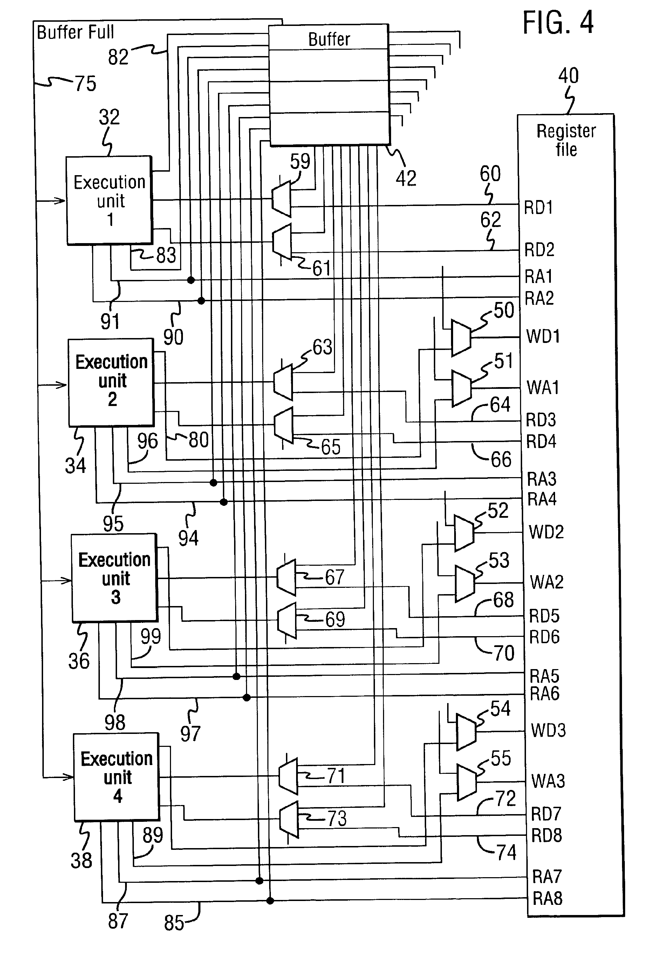

The circuitry of Figures 3A and 3B has thus reduced the number of write ports in register file 40 to less than the number of execution units. In Figure 3A, the read ports R_{D1} to R_{D8} are shown reading data directly back to execution units 32 to 38. However, if on a previous cycle a data value has been stored in buffer 42, then data in the requested register in register file 40 may not be the current data. If one of the execution units 34 to 38 reads a value from a register in register file 40 which is to be updated with a value currently being stored in buffer 42, then the value retrieved from register file 40 will not be up-to-date. Depending on the implementation this may not be a problem. The circuitry of Figure 4 shows an alternative embodiment which addresses this issue.

In Figure 4, additional multiplexers 59, 61, 63, 65, 67, 69, 71 and 73 are provided. Each of these multiplexers has two inputs, one of which comes from buffer 42 and the other of which comes from read data ports R_{D1} to R_{D8} on the register file 40 via lines 60 to 74 respectively. The outputs of multiplexers 59 and 61 go to execution unit 32, the outputs of multiplexers 63 and 65 go to execution unit 34, the outputs of multiplexers 67 and 69 go to execution unit 36, and the outputs of multiplexers 71 and 73 go to execution unit 38.

Each of the multiplexers 59 to 73 has a control input which is connected to buffer 42 such that either one of each multiplexer's two inputs may be connected to its output. These connections have not been shown in Figure 4. Buffer 42 has additional inputs for the read address signals from execution units 32 to 38. The two read address outputs from execution unit 32 on lines 90 and 91 not only go to register file 40, but also to buffer 42. The same is true of the two register address outputs from each of the execution units 34, 36 and 38 on lines 94, 95, 97, 98, 85 and 87 respectively. Circuitry relating to multiplexers 50 to 55 is the same as Figure 3A and will not be described again in detail in relation to Figure 4. For the sake of clarity, lines 44 to 49 from Figure 3A have not been shown in Figure 4, however these are still present in the embodiment of Figure 4. Similarly, the write enable signals and circuitry shown in Figure 3B are also present in the embodiment of Figure 4, however for clarity these have not been shown.

Operation of the multiplexers 59 to 73 and buffer 42 will now be described in relation to Figure 4. As explained above, the circuitry of Figure 4 prevents out of date data values being read from a register file 40. When any of the execution units 32 to 38 require to read a register value from register file 40, the read address is provided to the register file at one of the read address ports R_{A1} to R_{A8}. The read address is also provided to buffer 42. Buffer 42 is then able to check the read address and determine whether this address matches any write address of data values currently stored in buffer 42. If there is no match, and therefore there is no register value stored in buffer 42 which matches the address requested, then the buffer 42 controls multiplexers 59 to 73 such that the read output from a register file 40 is directed to the execution unit that requested it. However, if the buffer 42 finds a match between the read address from the execution unit, and a write address currently stored in the buffer 42, then buffer 42 controls multiplexers 59 to 73 such that they allow the output from buffer 42 to be passed to the execution unit that requested the read data, rather than the data returned by the register file. Buffer 42 will output the data value associated with the write address directly to the execution unit that requested it.

In order to prevent out of date values being read from buffer 42 in response to a read request, it is important that once a data value has been written to the register file 40, that data value and its associated address are cleared from the buffer memory or in some way invalidated. For example a valid bit could be provided associated with each data value and address in buffer 42. When this bit is set to logic value '1' this indicates that the associated data value and address is valid, and has yet to be written to register file 40. When this valid bit is set to logic value '0', then this indicates that the data value and address has already been written to register file 40, and therefore if that address is requested for a read, a miss should be returned. This data value and address may be overwritten.

An example of a read request will now be described in relation to Figure 4. If execution unit 34 requires to read two register values from register file 40, for example registers at addresses 56 and 58 (these addresses would be represented by 6 bits binary) of the 64 register values, then it will output the binary code for the addresses 56 and 58 on lines 94 and 95 respectively. Register file 40 will receive these values at read address input ports R_{A3} and R_{A4}, and will return on read data ports R_{D3} and R_{D4} the values from these registers respectively. At the same time buffer 42 will perform a check of the write address values currently stored in its memory, to determine whether there is a match to either of the addresses 56 and 58. For example, buffer 42 might find that execution unit 32 had requested a write to register 56, which is still to be processed in the buffer's memory. It may also find that there was no match with the register address for register 58. In this case, buffer 42 which control multiplexer 63 to output a value directly from buffer 42 to the execution unit 34 and buffer 42 would provide the data value associated with register 56 to execution unit 34. Buffer 42 would also control multiplexer 65 to allow the read data from read data output port R_{D4} of a register file 40 to pass directly to execution unit 34. The write address 56 and the associated data value to be stored in register 56 will remain in buffer 42 to be written to register file 40 at the next available time as explained in relation to Figure 3.

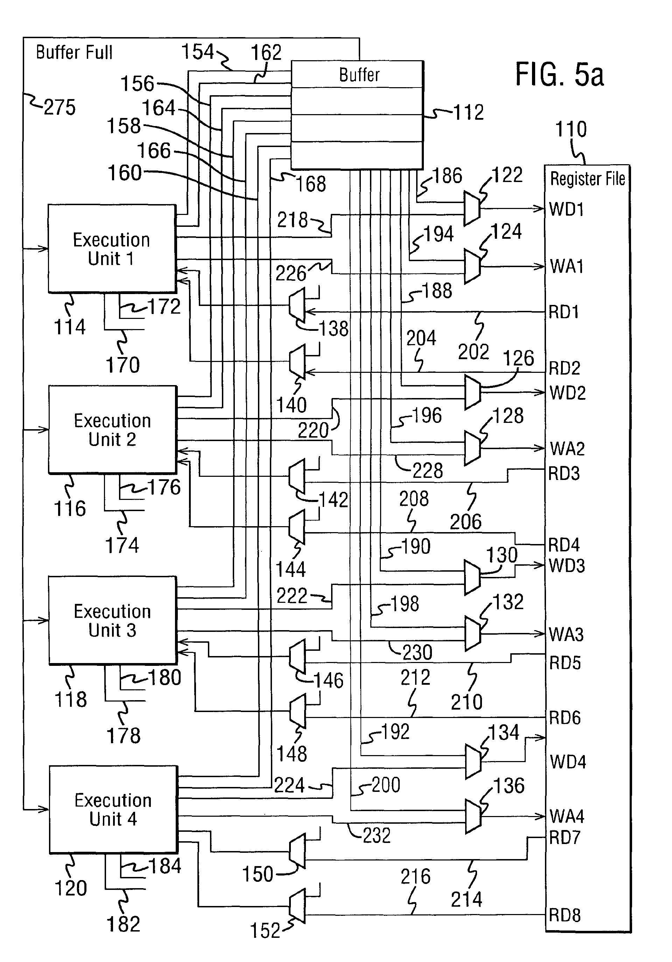

Reference will now be made to Figure 5A which shows a further embodiment of the present invention. The circuitry of Figure 5A allows each execution unit to have two write outputs for writing values to two registers in register file 110 on each clock cycle. As explained above, this is advantageous in that it allows more complex instructions to be processed by the execution units. As shown in Figure 5A, this is achieved without increasing the number of write ports in register file 110.

The circuitry of Figure 5A includes four execution units 114 to 120, a buffer 112, register file 110, eight multiplexers 122 to 136, and a further eight multiplexers 138 to 152. Each execution unit 114 now has two write data outputs, and two write address outputs. One of the two write data outputs from execution unit 114 goes to buffer 112 via line 154. The other of the write data outputs from execution unit 114 goes to multiplexer 122 via line 218. The write address values associated with the write data go to buffer 112 and multiplexer 124 on lines 162 and 226 respectively. Similarly, execution units 116, 118 and 120 have write data outputs to buffer 122 on lines 156, 158 and 160, and also write data outputs to multiplexers 126, 130 and 134 on lines 220, 222 and 224 respectively. Execution units 116 to 120 also have write address value outputs associated with the data outputs to buffer 112 on lines 164, 166 and 168, and also to multiplexers 128, 132 and 136 on lines 228, 230 and 232 respectively.

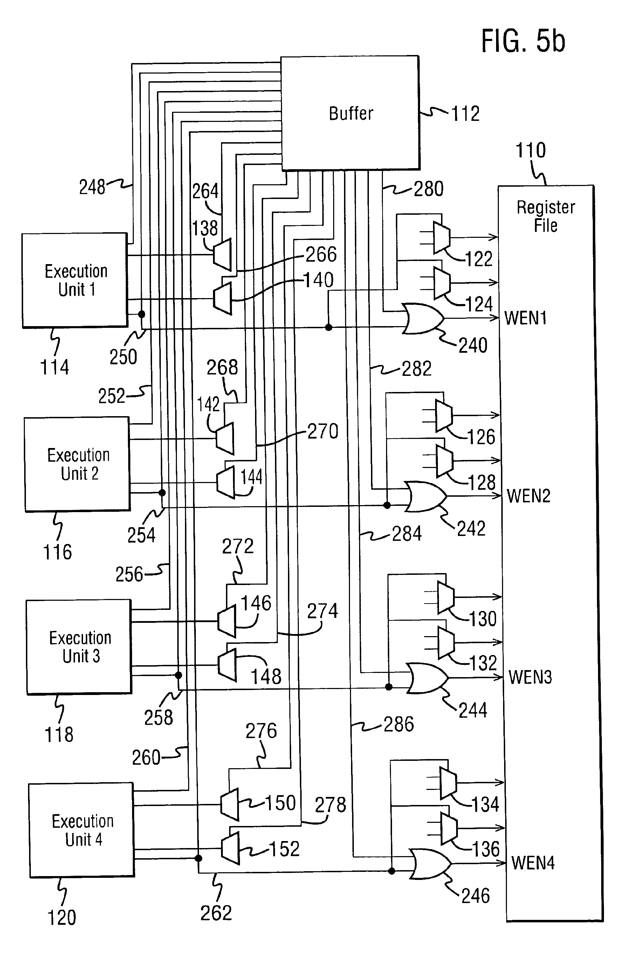

Multiplexers 138 to 152 are also provided with one of their inputs coming from one of the eight read data outputs R_{D1} to R_{D8} respectively, and the other of their inputs coming from buffer 112. As in the embodiments described in Figure 4, eight read data ports are provided on the register file 112, and multiplexers 138 to 152 operate in the same way as multiplexers 59 to 73 described in Figure 4. That is to say these multiplexers are for the purpose of verifying data read from register file 110 is up-to-date data, and if it is not up-to-date data then the value from buffer 112 is returned to the execution unit that made the read request. The embodiment of Figure 5A also includes write enable signals and circuitry which have not been shown for clarity reasons, but which are shown in Figure 5B and will now be described.

Figure 5B shows the write enable signals and circuitry between the execution units 114 to 120, register file 110 and buffer 112 of Figure 5A. Each of the execution units 114 to 120 includes first and second write enable signals, on lines 248 to 262. First write enable lines 248, 252, 256 and 260 from execution units 114 to 120 are connected to buffer 112. Second write enable signals on lines 250, 254, 258 and 262 from each execution unit are provided to one input of a respective OR gate 240 to 246. The outputs from these four OR gates are connected to respective write enable signals in register file 110. A second input to each of these OR gates is provided by buffer 112 on lines 280 to 286. Each of the two write enable outputs from each execution unit are associated with respective write data and write address signals shown in Figure 5A. For example the write enable signal on line 248 is associated with the write data signal on line 154 and the write address signal on line 162 from execution unit 114. As described above, the write enable signal indicates when the signals on the data and address lines are valid.

Figure 5B also shows control signals to the control input of each of the multiplexers 138 to 152, which are provided by buffer 112 on lines 264 to 278.

Operation of the circuitry in Figure 5A and 5B will now be described. Buffer 112 is able to accept write data and associated write address values from each of the execution units 114 to 120. The write data and write address outputs from each of the execution units which go to buffer 112 are preferably reserved for only the situation when one of the execution units requires to output two write outputs in one cycle. This is preferable to avoid buffer 112 filling too quickly. Buffer 112 must be able to store a number of the write addresses and write data from each execution unit and, when the write ports in register file 110 are not being used by the execution units 114 to 120 directly, buffer 112 may empty its memory to register file 110 via multiplexers 122 to 136. For example, buffer 112 may have room in its memory for two write data values and two associated write address values from each execution unit, and therefore buffer 112 will have memory space to store a total of eight write values and write addresses.

An example will now be described in order to illustrate the operation of the circuitry in Figures 5A and 5B. Assuming that execution units 114, 116, 118 and 120 all have two write data outputs and two write address outputs during a first clock cycle, one of the values from each execution unit will be sent directly to register file 110 via multiplexers 122 to 136, and the other write data and write address outputs will be sent to buffer 112 from each execution unit. Because each of the execution units 114 to 120 require use of a register file 110 during this first clock cycle, these execution units will output high write enable signals on lines 248 to 262. The write enable signals on lines 250, 254, 258 and 262 will control the eight multiplexers 122 to 136 to allow the values from these execution units to pass through to register file 110. At the same time, the write enable signals associated with these values will be passed to the write enable inputs of the register file via OR gates 240 to 246. These write enable signals are also provided to buffer 112, indicating to buffer 112 that all of the write ports are in use. The other four write data values and associated write address values from the execution units are sent to buffer 112 and will be stored in the buffers memory to be emptied and written to the register file 110 on a later cycle. The write enable signals on lines 248, 252, 256 and 260 indicate to buffer 112 when the write data and write address signals are valid and may be stored in its memory.

Assuming that on the next clock cycle each of the execution units 114 to 120 outputs one write data value and associated write address value (rather than two), then these values will again be sent directly to multiplexers 122 to 136, and the write enable signals 250, 254, 258 and 262 will again control these multiplexers to allow the values from the execution units to pass directly to register file 110. As all the write ports in register file 110 have been used in this second cycle, buffer 112 has been unable to empty any of the four data values and associated address values from its memory.

Assuming that on the next clock cycle two of the execution units 118 and 120 are stalled, and execution units 114 and 116 have only one write data output, buffer 112 will be able to empty two of the data values from its memory as will now be explained. Write enable signals from execution units 114 and 116 on lines 250 and 254 will be high, thereby controlling multiplexers 122 to 128 to allow execution units 114 and 116 to access the register file 110. Write enable signals from execution units 118 and 120 will be low as these units are stalled, and therefore multiplexers 130 to 136 will be controlled by the signals on lines 258 and 262 such that they allow the outputs from buffer 112 on lines 190, 198, 192, and 200 to pass to the write ports W_{D3}, W_{A3}, W_{D4} and W_{A4} respectively of the register file 110. Buffer 112 empties the first write data value in its memory to write data port W_{D3} on line 190. The associated write address with this data value is provided to write address ports W_{A3} via line 198. Buffer 112 also generates a write enable signal on line 284 indicating when these signals are valid. The write data value of the second data value stored in the memory of buffer 112 is provided to write port W_{D4} on line 192. The associated write address value is provided to write address port W_{A4} on line 200. Buffer 112 also generates a write enable signal on line 286 to indicate when these signals are valid. Register file 110 will accept the data and address signals when the write enable signals at its inputs W_{EN3} and W_{EN4} are high, and in this way buffer 112 has emptied two of the contents of its memory to register file 110. Buffer 112 will clear these first and second data values and address from its memory to prevent them being read in response to a read request. Alternatively a valid bit may be used as described above in relation to Figure 4. In this case buffer 112 will set the valid bit associated with these data and address values to logic '0'.

The remaining two values in the memory of buffer 112 may be written to register file 110 on a subsequent clock cycle in a similar fashion when any of the write data and write address ports W_{D1} to W_{D4} and W_{A1} to W_{A4} are not in use. Buffer memory 112 can also be filled whenever any of the execution units 114 to 120 needs to write two write outputs in one cycle.

As with the embodiments described in relation to Figures 3 and 4, if buffer 112 reaches its maximum capacity, the execution units may be stalled for one or more clock cycles so that the buffer memory may be emptied, using all the write ports of the register file. A buffer full signal 275 is provided for this purpose, which is provided to a stall input of each execution unit 114 to 120. This signal may be provided to the stall inputs in the same way as the buffer full signal 75 described in relation to Figure 3A. Buffer full signal 275 may be asserted when buffer 112 is full, or alternatively buffer full signal 275 may be asserted when buffer 112 has less free memory than the amount of memory required for the total number of writes that might be required at once. For example, as each of the four execution units 114 to 120 may write to buffer 112 at once, buffer full signal 275 may be asserted when there are less than four free data and address entries in buffer 112.

The read circuitry of Figure 5A operates in a similar fashion to the read circuitry of Figure 4. Read address outputs are provided from the execution units and are labelled 170 to 184. Each execution unit may request two read values on each cycle, and the addresses of the required registers are provided to read address ports in register file 110 (not shown in Figure 5) and also to buffer 112. As with the circuitry in Figure 4, buffer 112 is able to check whether any of the write data values stored in its memory are to be written to the same address as the read address requested via the execution unit, and buffer 112 is able to control multiplexers 138 to 152 via lines 264 to 278 to allow either the value from register file 110 or value from buffer 112 to pass back to the execution unit in response to the read request.

The situation can arise in any of the embodiments described that a write data value in buffer 112 or buffer 42 is out-of-date before being written to a register file. For example, a data value, which is to be written to address 38 in the register file, may be stored in a buffer on a first clock cycle from a first execution unit. On the next clock cycle, or a subsequent clock cycle when the data value is still in the buffer memory, a new data value for this address 38 may be output from the first execution unit or another execution unit. This situation is quite possible if a value is written to the buffer on the first cycle, and then requested in a read request on the next cycle and read directly from the buffer. The value is likely to then be updated and written again to the register file. In this situation, the out-of-date value in the buffer may be deleted, or overwritten by the new value, depending on whether the new value can be written directly to a write port or not. To enable this, buffer 112 or buffer 42 is provided with all of the write address values from each of the execution units, such that it may compare the write addresses with write addresses stored in its memory. If the write data is also supplied to the buffer, then the old value in memory may be overwritten. If only the write address is supplied to the buffer, indicating that the data value has been written to the register file, then this write value may be cleared from the buffers memory, or invalidated using the valid bit described above.

To implement this improved functionality, the system of Figure 5A for example could be updated such that the write addresses on lines 226, 228, 230 and 232 are also provided to buffer 112. Write enable signals associated with these addresses are already provided to buffer 112 on lines 250, 254, 258 and 262 respectively, indicating to the buffer 112 when these addresses are valid. On each cycle, buffer 112 may then check whether any of the eight write addresses it receives from the execution units match write addresses associated with data in its memory. If there is a match for a write address received on lines 162, 164, 166 or 168, then the associated data value received on lines 154, 156, 158 and 160 will overwrite this value in the buffer. If there is a match with one of the other write addresses, from lines 226, 228, 230 or 232, the data values at these addresses are already being updated via multiplexers 122 to 136, and therefore this write address and associated data value can be deleted from the buffer.

Advantageously according to embodiments of the present invention, the number of write ports in a register file is either reduced as described in relation to Figures 3A and 4, or the number of write outputs from the execution units is increased as described in relation to Figure 5A, whilst the number of write ports in the register file remains the same. It will be apparent that in alternative embodiments, any of this circuitry may be combined. For example, referring to Figure 4, any of the execution units 32 to 38 may be provided with an extra write data and write address output to buffer 42 allowing any of the execution units 32 to 38 to process complex instructions requiring two write outputs.

Likewise, referring to Figure 5A, the memory in buffer 112 could be enlarged, one of the write data and one of the write address ports from register file 110 could be removed, and all the data outputs from one of the execution units could be provided to buffer 112. For example execution unit 114 could have all of its write data and write address outputs sent directly to buffer 112 for storage, and multiplexers 122 and 124 could be removed, and their associated write data and write address ports removed. In this way each of the execution units 114 to 120 would have two write outputs, and only three write ports provided in register file 110. It will be apparent in such a scenario that demand for access to the register file 110 may not be met adequately, and buffer 112 may repeatedly hit its full capacity (and require the execution units to stall). However, this would depend on the parallelism of the instructions provided to the execution units, and the available redundancy in a system that may be exploited as described above.

## Claims

1. A system comprising:
a plurality of execution circuitry (32, 34, 36, 38, 114, 116, 118, 120) for executing instructions;
a register file (40, 110) comprising at least one port; and
circuitry for allowing a plurality of said execution circuitry to share a common port of said register file (40, 110).

2. The system of claim 1 wherein said circuitry comprises a buffer (42, 112) for storing at least one data value from one of said execution circuitry (32, 34, 36, 38, 114, 116, 118, 120).

3. The system of claim 2 wherein said buffer (42, 112) comprises a buffer full output (75, 275) indicating when said buffer is full.

4. The system of claim 2 wherein said buffer (42, 112) comprises a buffer full output (75, 275) indicating when said buffer is nearly full.

5. The system of claims 3 or 4 wherein said buffer full output (75, 275) is provided to at least one of said plurality of execution circuitry (32, 34, 36, 38, 114, 116, 118, 120), wherein said at least one execution circuitry is arranged to stall when said buffer full signal is asserted.

6. The system according to any of claims 1 to 5 wherein at least one of said plurality of execution circuitry (32, 34, 36, 38, 114, 116, 118, 120) comprises a write enable output.

7. The system of claim 6 wherein said write enable output is provided to said buffer (42, 112) and said buffer is arranged to output data values to said common port of said register file (40, 110) if said write enable output is not asserted.

8. The system of any proceeding claim wherein said buffer(42, 112) has at least one write enable output connected to said register file (40, 110) for providing a write enable signal to said register file.

9. The system of any preceding claim wherein said circuitry comprises at least one multiplexer comprising at least one output connected to said common port.

10. The system of any preceding claim wherein said common port is one of:
a write data port; and
a write address port.

11. The system according to any of claims 2 to 10 wherein said at least one data value is one of:
a write data value;
a write address; and
a read address.

12. The system according to claim 9 wherein said at least one multiplexer further comprises a first input connected to one of:
said buffer; and
at least one of said execution circuitry(32, 34, 36, 38, 114, 116, 118, 120).

13. The system according to claim 12 wherein said multiplexer further comprises a second input connected to the output of one of said execution circuitry (32, 34, 36, 38, 114, 116, 118, 120) and a third input for receiving a signal for determining which of said first and second inputs is connected to the output of said multiplexer.

14. The system of claim 13 wherein said third input of said multiplexer is connected to a write enable output of one of said execution circuitry (32, 34, 36, 38, 114, 116, 118, 120).

15. The system according to any preceding claim wherein said system further comprises at least one multiplexer comprising at least one output connected to one of said execution circuitry (32, 34, 36, 38, 114, 116, 118, 120), a first input connected to an output port of said register file (40,110), a second input connected to said buffer, and a third input for receiving a signal for determining which of first and second inputs is connected to said output.

16. The system of claim 15 wherein said output port of said register file (40,110) is a read data port for providing a value read from one of a plurality of registers in said register file.

17. The system according to any of claims 2 to 16 wherein n execution circuitry(32, 34, 36, 38, 114, 116, 118, 120) are provided, m of which can write directly to an associated one of m ports of said register file (40,110), and at least one of which may only write to said buffer(42,112).

18. The system according to any of claims 2 to 16 wherein n execution circuitry are provided, wherein at least one execution circuitry (32, 34, 36, 38, 114, 116, 118, 120) comprises a plurality of output ports, wherein said at least one execution circuitry is arranged to output data from at least one output port directly to an associated one of said at least one ports of the register file (40, 110), and output data from at least one output port only to said buffer (42, 112).

19. The system according to any of claims 2 to 16 wherein n execution units are provided with a total of p outputs, said register file (40, 110) comprises m input ports and at least one of the p outputs from said execution circuitry (32, 34, 36, 38, 114, 116, 118, 120) can output data directly to an associated one of said p input ports of said register file (40, 110), and at least one of said outputs can only output data to said buffer (42, 112).

20. The system of any of claims 17 to 19 wherein data is outputted from said buffer (42, 112) to one of said ports of said register file (40, 110) only when said port is not being used by an associated one of said n execution circuitry (32, 34, 36, 38, 114, 116, 118, 120).

21. The system of any preceding claim wherein at least one of said plurality of execution circuitry comprises an address output connected to said buffer (42,112) for providing an address to said buffer, wherein said buffer is arranged to compare said address with any address stored in said buffer.

22. A device comprising the system as claimed in any preceding claim.

23. An integrated circuit comprising the system as claimed in any of claims 1 to 20.
